# EUROPÄISCHE PATENTSCHRIFT

(11) **EP 2 274 549 B1**
(45) Veröffentlichungstag und Bekanntmachung des Hinweises auf die Patenterteilung: **04.07.2012**
(21) Anmeldenummer: 09745722.0
(22) Anmeldetag: 12.05.2009
(51) Int. Cl.: F16L 13/10

(54) **VERBINDEN VON ROHREN MIT THERMISCH HÄRTBAREN KLEBSTOFFEN**
CONNECTION OF TUBES USING THERMALLY CURABLE ADHESIVES
RACCORDEMENT DE TUYAUX À L'AIDE D'ADHÉSIFS THERMODURCISSABLES

(30) Priorität: 13.05.2008 DE 102008023276
(43) Veröffentlichungstag der Anmeldung: 19.01.2011
(73) Patentinhaber: Henkel AG & Co. KGaA, 40589 Düsseldorf (DE)
(72) Erfinder: FERRARI, Andrea, 40597 Düsseldorf (DE); BILCAI, Eugen, 85764 Oberschleißheim (DE)
(74) Vertreter: Kann, Wolfgang
(86) Internationale Anmeldenummer: PCT/EP2009/055693
(87) Internationale Veröffentlichungsnummer: WO 2009/138390

(56) Entgegenhaltungen:
- EP-A2- 1 785 657
- WO-A2-2004/074725
- BE-A7- 767 278
- DE-B- 1 248 392
- GB-A- 2 090 932
- US-A- 3 771 820
- US-A- 3 937 641

## Beschreibung

Die vorliegende Erfindung betrifft ein Verfahren zum Verbinden von Rohren mit thermisch härtbaren Klebstoffen bei der Herstellung von Kühlschränken, wobei die Rohrleitungen für das Kühlmedium nach dem erfindungsgemäßen Verfahren miteinander verbunden werden. Dabei schließt der Begriff "Herstellung" auch die Instandsetzung eines gebrauchten Kühlschranks mit Hilfe der erfindungsgemäßen Verfahrensschritte ein. Dabei wird zumindest eines der jeweils zu verklebenden Rohrenden in deren Überlappungsbereich mit einem Klebstoff beschichtet, der bei Raumtemperatur fest und vorzugsweise nicht klebrig ist und der nicht ohne eine thermische Aktivierung aushärtet. Vorzugsweise expandiert der Klebstoff irreversibel bei der thermischen Aktivierung, so dass er die verklebten Rohrstücke gegeneinander verpresst. Die thermische Aktivierung erfolgt vorzugsweise durch beheizbare Klemmen, mit denen die zu verbindenden Rohrstücke fixiert werden, bis der Klebstoff aushärtet. Die mit Klebstoff vorbeschichteten Rohrstücke können versandt und gelagert werden, ohne dass die Klebstoffschicht ihre Funktionsfähigkeit verliert.

Bei der Herstellung von Kühlschränken müssen Leitungsstücke für das Kühlmedium miteinander verbunden werden. Ein üblicher Haushaltskühlschrank weist etwa 6 bis 8 solcher Verbindungsstellen auf, beispielsweise beim Übergang vom und zum Kompressor und vom und zum Wärmetauscher. Derzeit werden die Rohre in der Regel miteinander verlötet. Dies setzt voraus, dass zumindest jeweils eines der zu verbindenden Rohre aus Kupfer anstelle aus dem preiswerteren Aluminium besteht, da zwei Aluminiumrohre nicht dauerhaft miteinander verlötet werden können. Die notwendige Verwendung des teureren Kupfers verteuert das Leitungssystem für das Kühlmedium. Löten ist ein handwerklich anspruchsvoller Verfahrensschritt, der entsprechend ausgebildetes Personal erfordert.

Die einzelnen Rohrstücke könnten auch in ihrem Überlappungsbereich miteinander verklebt werden. Dabei stellt sich jedoch das Problem, auf welche Weise der Klebstoff aufgetragen und ausgehärtet werden soll. Dennoch sind im Stand der Technik einige Verfahren bekannt, Rohre für Kühlmedien miteinander zu verkleben. Insbesondere wurde dies im Zusammenhang mit der Herstellung der Wärmetauscher für Kühlschränke vorgeschlagen.

Ein Beispiel hierfür ist das Dokument JP 2006/194543. Es beschreibt einen Wärmetauscher bestehend aus metallischen Rohrstücken, die durch senkrecht zu den Rohrstücken verlaufende Kühllamellen miteinander verbunden sind. Offene Enden benachbarter Metallrohre werden durch U-förmige Endrohre miteinander verbunden, wofür ein flüssiger wärmehärtbarer Klebstoff verwendet wird. Ahnliche Verfahren speziell zur Verbindung von Aluminium- und Kupferrohre werden in JP 2006/138468 und der US 3771820 A beschrieben.

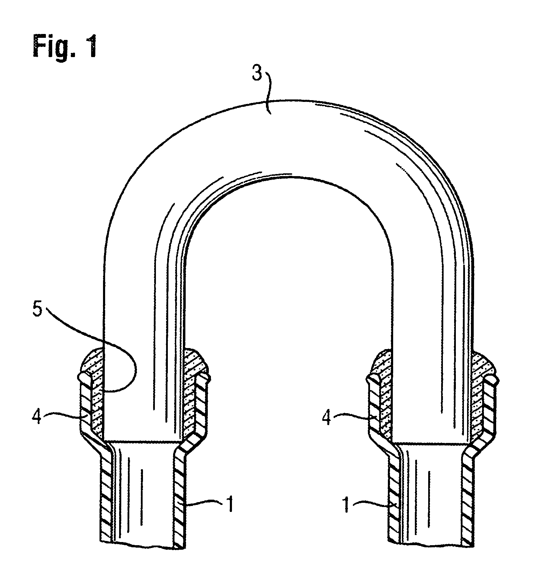

Abbildung 1 zeigt genauer, wie das Verkleben der U-förmigen Endrohre (3) mit den Metallrohren (1) erfolgen kann. In dieser Ausführungsform sind die Endstücke (4) der Metallrohre (1) aufgeweitet. Das U-förmige Endrohr wird in diese aufgeweiteten Endstücke der Metallrohre (4) hinein gesteckt, wobei in den entstehenden Spalt zwischen dem aufgeweiteten Endstück (4) und dem U-förmigen Endrohr (3) ein Klebstoff (5) eingebracht wird. Gemäß dem Dokument GB 2008462, dem die Figur 1 entnommen ist, geschieht dies offensichtlich unmittelbar vor dem Fügen der beiden Teile. Als Klebstoff wird typischerweise ein thermisch härtbarer Epoxi-Klebstoff eingesetzt. In diesem Fall bestehen die Metallrohre (1) und die U-förmigen Endrohre (3) beide aus Aluminium. Zur Verbesserung von Klebkraft und Korrosionsschutz wird zusätzlich vorgeschlagen, die Aluminiumoberflächen vor dem Auftragen des Klebstoffs einer Konversionsbehandlung zu unterwerfen, um eine unkontrollierte Oxidbildung zu vermeiden.

Das Auftragen eines flüssigen Klebstoffs im Fertigungsbereich der Wärmeaustauscher bzw. der Kühlschränke allgemein hat den Nachteil, dass hierfür spezielle Applikationssysteme zur Verfügung gestellt werden müssen. Fehlfunktionen der Applikationssysteme können zu einer Verschmutzung von Arbeitsbereich und Werkstücken mit Klebstoff führen. Eine thermische Aushärtung der verklebten Wärmetauscher ist dadurch möglich, dass man den zusammengebauten Wärmetauscher in einen Heizofen stellt. Dies lässt sich nicht auf das komplette Leitungssystem eines fertig montierten Kühlschranks einschließlich Kompressor, Plastikteile etc. übertragen, da dieser bei der für das thermische Aushärten des Klebstoffs erforderlichen Temperatur Schaden nimmt.

Die vorliegende Erfindung schlägt eine Lösung dieses Problems vor.

Die vorliegende Erfindung betrifft in einem ersten, verallgemeinerten Aspekt ein Verfahren zur Verbindung eines ersten Rohrs mit einem zweiten Rohr, wobei die Rohre miteinander in einem Überlappungsbereich unter Verwendung eines Klebstoffs verbunden werden, der einen Spalt im Überlappungsbereich zwischen den Rohren ausfüllt, dadurch gekennzeichnet, dass man:
a) den Klebstoff auf den Überlappungsbereich mindestens eines der Rohre aufbringt und wobei der Klebstoff so ausgewählt wird, dass er nach dem Aufbringen auf den Überlappungsbereich und vor dem Verbinden der Rohre bei Temperaturen unterhalb von 30 °C fest ist und nicht ohne thermische Aktivierung aushärtet,
b) das Rohr mit dem im Überlappungsbereich angebrachten Klebstoff auf das andere Rohr aufsteckt oder in dieses einsteckt,
c) die Rohre im Überlappungsbereich mit einer beheizbaren Klemme gegeneinander fixiert, wobei die Klemme so ausgestaltet ist, dass sie die Rohre im Überlappungsbereich erwärmen kann,
c) den Klebstoff durch Erwärmen des Überlappungsbereichs mit Hilfe der beheizbaren Klemme thermisch aktiviert, so dass er aushärtet und die beiden Rohre im Überlappungsbereich verbindet, und
d) nach Aushärten des Klebstoffs die beheizbare Klemme entfernt.

Der Unterschied zum einleitend beschriebenen Stand der Technik besteht darin, dass der Klebstoff nicht unmittelbar vor dem Zusammenfügen der Rohre in flüssiger Form im Bereich der Überlappung der beiden Rohrstücke aufgebracht wird und beim Fügen dieser Teile flüssig ist. Vielmehr wird der Klebstoff vor dem Fügen der beiden Rohrstücke auf den Überlappungsbereich zumindest eines Rohrs in einer Form aufgetragen, dass er beim Ein- oder Aufstecken dieses Rohrs in bzw. auf das das damit zu verbindende Rohr in fester und vorzugsweise in nicht klebriger Form vorliegt.

Nach diesem Verfahren ist es möglich, den Klebstoff am Ort der Herstellung der Rohrstücke aufzubringen und die mit dem Klebstoff vorbeschichteten Rohrteile zu versenden und zu lagern. Der Klebstoff kann also zentral beim Hersteller der Rohrteile aufgetragen werden und muss nicht mehr dezentral an den Fertigungsorten der kompletten Kühlschränke appliziert werden. Alternativ ist es jedoch auch möglich, am Ort der Herstellung der Kühlschränke die erforderlichen Rohrstücke zuzuschneiden und im Überlappungsbereich den Klebstoff bei erhöhter Temperatur aufzutragen. Beim Abkühlen auf Raumtemperatur verfestigt sich der Klebstoff, so dass die mit Klebstoff versehenen Rohrstücke gehandhabt werden können, ohne dass der Klebstoff verschmiert wird oder das Umfeld verschmutzt.

Dabei ist das Merkmal, dass der Klebstoff "fest" sein soll, so zu verstehen, dass dieser zumindest eine solche Viskosität aufweist, dass er unter dem Einfluss der Schwerkraft nicht fließt und dass er bei der normalen Handhabung der Rohrstücke, beispielsweise zur Verpackung und zum Versand oder auch beim Zusammenbau des Rohrleitungssystems nicht deformiert wird.

Vorzugsweise ist der Klebstoff bei Raumtemperatur (22 °C) nicht nur in diesem Sinne "fest", sondern auch nicht klebrig. Das Merkmal, "nicht klebrig" zu sein, bedeutet, dass sich der Klebstoff beim Berühren mit dem Finger nicht klebrig anfühlt und dass er nicht an Verpackungsmaterial oder an anderen vorbeschichteten Rohrstücken haftet. Dieses und das vorgenannte Merkmal erlauben es, die mit Klebstoff vorbeschichteten Rohrstücke entweder einzeln verpackt oder als geschüttete Ware zu versenden.

Zum Auftragen des Klebstoffs auf die Rohrstücke muss dieser zumindest streichfähig sein. Dies kann man beispielsweise dadurch erreichen, dass man einen bei Temperaturen unterhalb von 30 °C festen Klebstoff so weit erwärmt, dass er streichfähig ist und beispielsweise durch Auspressen aus einer Düse aufgetragen werden kann. Beim Abkühlen auf eine Temperatur unterhalb von 30 °C nimmt der Klebstoff wieder den wie vorstehend definierten festen Zustand an. Bei den thermisch aktivierbaren Klebstoffen darf die Auftragstemperatur selbstverständlich nicht oberhalb der Aktivierungstemperatur liegen. Weiterhin kann der Klebstoff als Wasser- oder Lösemittel-haltige, streichfähige Paste aufgebracht werden. Nach Abdampfen des Wassers bzw. des Lösungsmittels geht er in den erwünschten festen Zustand über.

Das Aushärten des Klebstoffs wird durch thermische Aktivierung ausgelöst, worunter ein Erwärmen auf mindestens 50 °C verstanden wird. Die tatsächlich erforderliche Mindesttemperatur hängt von der Zusammensetzung des Klebstoffs ab. Unterhalb der Aktivierungstemperatur härtet der Klebstoff nicht aus, so dass er während Transport oder Lagerung der vorbeschichteten Rohrstücke seine Klebekraft nicht verliert.

Das erfindungsgemäße Verfahren ist für die gängigen Metalle geeignet, aus denen im Kühlschrankbau die Metallrohre für das Kühlmedium gefertigt werden. Dies sind insbesondere Kupfer bzw. Kupferlegierungen sowie Aluminium bzw. Aluminiumlegierungen. Dabei sind folgende Materialkombinationen möglich:
a) erstes und zweites Rohr bestehen aus Kupfer oder einer Kupferlegierung,
b) erstes und zweites Rohr bestehen aus Aluminium oder einer Aluminiumlegierung,
c) das eine Rohr besteht aus Kupfer oder einer Kupferlegierung und das andere Rohr besteht aus Aluminium oder einer Aluminiumlegierung.

Dabei ist im Rahmen der vorliegenden Erfindung die Alternative b) bevorzugt, da sie im Gegensatz zum bisherigen Stand der Technik die Herstellung von Kühlschränken mit einem besonders preisgünstigen Leitungssystem für das Kühlmedium ermöglicht.

Sofern zumindest eines der Rohre aus Aluminium oder einer Aluminiumlegierung besteht, kann dieses zumindest im Überlappungsbereich vor dem Aufbringen des Klebstoffs einer chemischen Oberflächenbehandlung unterzogen werden. Für Einzelheiten wird auf die Ausführungen in dem zitierten Dokument GB 2008462 verwiesen. Anstelle der dort bevorzugt eingesetzten Chromatierung wird jedoch aus Umweltgründen ein chromfreies Konversionsverfahren bevorzugt, beispielsweise eine Behandlung der Aluminiumoberflächen mit einer sauren wässrigen Lösung komplexer Fluoride mindestens eines der Elemente B, Si, Ti, Zr. Hierfür können beispielsweise Verfahren eingesetzt werden, wie sie in EP 754 251 oder im dort einleitend zitierten Stand der Technik vorgeschlagen werden.

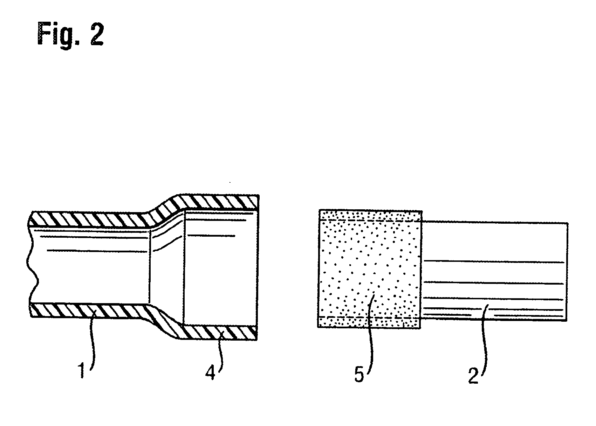

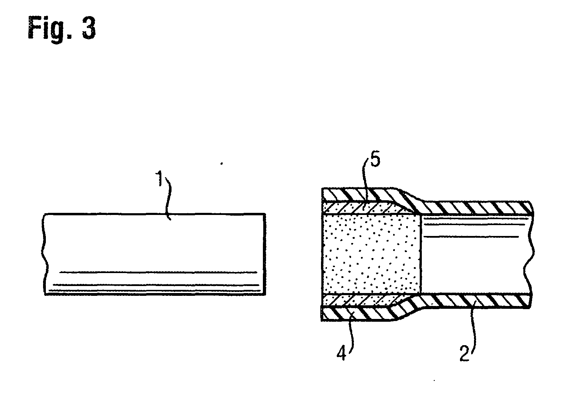

Vorzugsweise ist das eine der beiden zu verbindenden Rohre im Überlappungsbereich aufgeweitet, so dass die beiden Rohrenden im Überlappungsbereich übereinander geschoben werden können. Dies ermöglicht zwei unterschiedliche Auftragungsweisen des Klebstoffes im Überlappungsbereich der beiden Rohre. In Fig. 2 ist die Alternative dargestellt, dass der Klebstoff auf die Innenwand des aufgeweiteten Überlappungsbereichs eines der beiden Rohre aufgetragen ist und diesem in Art einer Innenmanschette anliegt. Fig. 3 zeigt eine alternative Ausführungsform hierzu. Hierbei ist der Klebstoff nach einer Art Außenmanschette auf den nicht-aufgeweiteten Überlappungsbereich eines der beiden Rohre aufgetragen, das dann zusammen mit der Klebstoffschicht in den aufgeweiteten Überlappungsbereich des anderen Rohres eingesteckt werden kann. Selbstverständlich ist es auch möglich, sowohl den aufgeweiteten Überlappungsbereich des einen Rohres innen als auch den nicht-aufgeweiteten Überlappungsbereich des zweiten Rohres außen mit Klebstoff zu beschichten. Dies ist jedoch verfahrenstechnisch aufwendiger und bringt zumindest dann keinen Vorteil, wenn die Klebstoffe einkomponentig ausgebildet sind. Jedoch kann diese Ausführungsform bei zweikomponentig ausgebildeten Klebstoffen Verwendung finden, wenn man die eine Komponente auf die Innenwand des aufgeweiteten Überlappungsbereichs des einen Rohres und die zweite Komponente auf die Außenwand des Überlappungsbereichs des nicht-aufgeweiteten Rohres aufbringt. Bei der thermischen Aktivierung verflüssigen die beiden Komponenten, vermischen sich und reagieren miteinander, wodurch der Klebstoff aushärtet.

Selbstverständlich ist ein Aufweiten eines der beiden im Überlappungsbereich zu verklebenden Rohrenden dann nicht erforderlich, wenn man Rohre mit unterschiedlichen Durchmesser verwendet, die so aufeinender abgestimmt sind, dass ein Rohr über das andere geschoben werden kann. Die im vorstehenden Absatz beschriebenen unterschiedlichen Weisen, eines oder beide Rohre im Überlappungsbereich mit dem Klebstoff zu beschichten, gelten dann analog.

Die Abbildungen 2 und 3 zeigen Ausführungsformen, bei denen der Überlappungsbereich des einen Rohres zylinderförmig aufgeweitet ist und der Überlappungsbereich des hierin einzusteckenden zweiten Rohres nicht verformt ist. Weitere Ausführungsformen sind jedoch möglich. Zum Beispiel kann der Überlappungsbereich des einen Rohres konisch aufgeweitet sein und sich der Überlappungsbereich des zweiten Rohres entsprechend konisch verjüngen.

Vorzugsweise ist die beheizbare Klemme elektrisch beheizbar. Dabei wird unter einer "Klemme" jede Vorrichtung verstanden, die geöffnet und geschlossen werden kann und die im geschlossenen Zustand die beiden Rohre an den zu verbindenden Enden mechanisch gegeneinander fixiert. In diesem Sinne gleichbedeutend mit "Klemme" könnten auch die Begriffe "Klammer", "Schelle", "Manschette" oder ähnliche Begriffe verwendet werden. Wichtig ist lediglich die Funktion, dass die Klemme im Bereich der Überlappung der zu verbindenden Rohre angebracht werden kann, die beiden Rohre gegeneinander so lange fixiert, bis der Klebstoff ausgehärtet ist, und danach wieder entfernt werden kann. Allgemein wird daher hier unter dem Begriff "Klemme" jede beheizbare Rohrleitungskupplung oder -verbindung verstanden.

Vorzugsweise weist die beheizbare Klemme zwei halbrunde Klemmbacken auf, deren Rundung an Form und Durchmesser der zu verbindenden Rohre angepasst ist. Weiterhin weist die beheizbare Klemme vorzugsweise ein elastisches Bauteil wie beispielsweise eine Feder zum Zusammenhalten der Klemmbacken auf. Dieses Bauteil oder diese Feder presst die Klemmbacken gegen die zu verbindenden Rohre und fixiert diese mechanisch, ohne dass eine weitere äußere Kraft erforderlich ist. Zum Anbringen und zum Lösen der Klemme wird das elastische Bauteil bzw. die Feder so zusammengedrückt bzw. gedehnt, dass sich die Klemmbacken öffnen. Das elastische Bauteil könnte die Klemmbacken auch derart vorspannen, dass die Klemmbacken eine Schnappverbindung bereitstellen und beim gegenseitigen Verhaken die Rohrteile verklemmen. Weiterhin könnten die Klemmbacken selbst elastisch ausgestaltet sein, so dass ein vorstehendes Teil der einen Klemmbacke in einer Aussparung der zweiten Klemmbacke beim Verschwenken der Klemmbacken gegeneinander einrasten kann.

Als Alternative zum Zusammenhalten der Klemmbacken durch Federkraft könnten diese nach Aufbringen auf den Rohren auch auf andere Weise zusammengepresst werden, beispielsweise durch Verschrauben oder durch Anbringen eines elastischen Bandes. Dies ist jedoch aufwendiger als die Verwendung eines elastischen Bauteils und daher weniger bevorzugt.

Alternativ kann zum Zusammenhalten der zu verbindenden Rohrstücke eine beheizbare einteilige Klemmverbindung verwendet werden, die im geschlossenen Zustand die Rohrenden fest umschließt, jedoch entlang einer Längsnaht parallel zu den Rohrstücken gegen ihre eigene Rückstellkraft geöffnet werden kann. Zum Fixieren der Rohrstücke öffnet man unter Kraftaufwand das Klemmteil, legt dies um die Rohrstücke herum und lässt es sich aufgrund der eigenen Rückstellkraft wieder schließen. Nach dem Aushärten des Klebstoffes wird das Klemmteil wieder durch Krafteinwirkung geöffnet.

Zum Erwärmen enthält die beheizbare Klemme vorzugsweise ein elektrisches Widerstands-Heizelement. Dieses kann beispielsweise einen Widerstandsdraht enthalten oder darstellen. Es kann auch ein Heizwiderstand zum Einsatz kommen, welcher aus Carbonfasern besteht. Hier ist insbesondere ein Carbonvlies oder ein Carbongewebe verwendbar. Dieses hat den Vorteil, dass die anzulegende Spannung fast vollständig und gleichmäßig über die gesamte Fläche in Wärme umgewandelt wird. Im Gegensatz zu einem Widerstandsdraht können lokale Beschädigungen die Funktion des Gewebes oder Vlieses nicht außer Kraft setzen, da der Strom dann über die anderen Fasern fließt.

Das Erwärmen der zu verbindenden Rohre und der Klebstoffschicht im Überlappungsbereich auf die Aushärtungstemperatur erfordert eine gewisse Mindestzeit. In der Praxis liegt diese bei etwa 5 Minuten Im Interesse eines raschen Produktionsablaufs wird der Klebstoff vorzugsweise so gewählt, dass er nach Erreichen der Aushärtungstemperatur innerhalb von höchstens 15 Minuten soweit aushärtet, dass die Klemme entfernt werden kann. Daher ist es im praktischen Arbeitsablauf bevorzugt, dass man die beheizte Klemme für eine Zeitdauer im Bereich von 5 bis 15 Minuten am Überfappungsbereich der Rohre belässt.

Die Temperatur, die der Klebstoff zum Aushärten mindestens erreichen muss, hängt von dessen chemischer Zusammensetzung ab. Sie sollte mindestens 50°C betragen, damit der Klebstoff unter warmen Umgebungsbedingungen nicht vorschnell aushärtet. Vorzugsweise hat der Klebstoff eine Aushärtungstemperatur von mindestens 70°C, insbesondere von mindestens 80°C. Jedoch sollte die für das Aushärten erforderliche Temperatur einen Wert von 150°C und insbesondere 130°C nicht überschreiten, um eine mögliche thermische Schädigung des Rohrmaterials zu verhindern, den Energieaufwand für das Aufheizen zu begrenzen und den genannten raschen Arbeitstakt von höchstens 15 Minuten zu ermöglichen.

Wie vorstehend bereits betont, kann das erfindungsgemäße Verfahren insbesondere bei der Herstellung von Kühlschränken eingesetzt werden, um das Rohrleitungssystem für das Kühlmedium anzufertigen. Daher handelt es sich bei den erfindungsgemäß zu verbindenden Rohren vorzugsweise um Rohre zum Transport des Kühlmediums eines Kühlschranks. Dabei wird unter "Kühlschrank" jede Einrichtung verstanden, die einen zu kühlenden Innenraum aufweist, wobei die Wärme aus dem Innern des Kühlschranks über einen Wärmetauscher durch das Kühlmedium abgeführt und außerhalb des Kühlschranks über einen weiteren Wärmetauscher an die Umgebung abgeführt wird. Der Temperaturgradient zwischen dem Kühlmedium in den Wärmetauschern innerhalb und außerhalb des Kühlschranks wird bekanntermaßen über einen Kompressor in Verbindung mit einem Verdampfer hergestellt. Im Sinne der vorliegenden Erfindung umfasst daher der Begriff "Kühlschrank" auch Geräte wie beispielsweise Kühltruhen, Gefrierschränke und ähnliches.

Erfindunsgemäß verwendet man einen Klebstoff, der sein Volumen bei oder nach der thermischen Aktivierung um mindestens 0,5 %, vorzugsweise um mindestens 1 %, jedoch vorzugsweise maximal um bis zu 50 %, insbesondere maximal um bis zu 25 % vergrößert. Hierunter ist zu verstehen, dass der Klebstoff zusätzlich zur normalen und reversiblen thermischen Ausdehnung gemäß seinem thermischen Ausdehnungskoeffizienten sein Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um 0,5 bis 50 %, vorzugsweise um 1 bis 25 % größer ist als zuvor. Der angegebene Expansionsgrad bezieht sich also auf das Volumen des Klebstoffs bei Raumtemperatur vor und nach dem vorübergehenden Erhitzen auf die Aktivierungstemperatur.

Hierzu enthält der Klebstoff vorzugsweise ein physikalisch oder chemisch wirkendes Treibmittel, das bei der Aktivierung des Klebstoffs selbst aktiviert wird und das durch Gasbildung oder Gas-Ausdehnung das Volumen des Klebstoffs vergrößert. Bei physikalisch wirkenden Treibmitteln ist die Volumenvergrößerung eine physikalische Folge des Erwärmens von mit Gas oder verdampfbarer Flüssigkeit gefüllten Mikrohohlkugeln. Bei chemischen Treibmitteln wird durch eine chemische Reaktion ein Gas abgespalten, welches die Volumenvergrößerung des Klebstoffs bewirkt.

Aufgrund der Volumenvergrößerung nach der Aktivierung ist es nicht erforderlich, dass das im Überlappungsbereich mit Klebstoff vorbeschichtete Rohr passgenau und/oder unter Krafteinwirkung in das andere Rohr eingesetzt oder auf dieses aufgesetzt wird. Vielmehr darf ein Luftspalt zwischen Klebstoff und Wand des andern Rohrs verbleiben, was das Zusammenstecken der beiden Rohrteile erleichtert. Aufgrund der Volumenvergrößerung füllt der Klebstoff nach der Aktivierung diesen Luftspalt aus und verbindet hierdurch die beiden Rohrteile kraftschlüssig.

Geeignete Treibmittel sind im Stand der Technik bekannt, z. B. "chemische Treibmittel" die durch Zersetzung Gase freisetzten oder "physikalische Treibmittel", d.h. expandierende Hohlkugeln. Beispiele für die erstgenannten Treibmittel sind Azobisisobutyronitril; Azodicarbonamid, Di-Nitroso-pentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden jedoch die expandierbaren Kunststoffmikrohohlkugeln auf der Basis von Polyvinylidenchloridcopolymeren oder Acrylnitril/(Meth)acrylat-Copolymeren. Diese sind z.B. unter den Namen "Dualite" bzw. "Expancel" von den Firmen Pierce & Stevens bzw. Casco Nobel im Handel erhältlich.

In der vorstehend beschriebenen Ausführungsform der Verwendung eines Klebstoffs, der sich nach Aktivierung ausdehnt, ist es nicht erforderlich, dass sich der Klebstoff während oder nach der Aktivierung verflüssigt, um die Klebefuge zwischen den beiden Rohren vollständig auszufüllen. In einer alternativen Ausführungsform kann man jedoch so vorgehen, dass man auf Einsatz eines Treibmittels verzichtet und dass man einen Klebstoff verwendet, der während des Aktivierungsschritts zuerst (d. h. vor dem Abbinden) geschmolzen bzw. verflüssigt wird, ohne dass hierbei eine über die übliche Wärmeausdehnung hinausgehende Volumenvergrößerung stattfindet. Während des Zusammenfügens ist der Klebstoff also noch fest. Das Aufschmelzen bzw. Verflüssigen nach dem Zusammenstecken der Fügeteile führt dazu, dass der Klebstoff aufgrund von Kapillarkräften die Klebefuge überbrückt. Er härtet dann in diesem Zustand aus, so dass eine kraftschlüssige Verbindung zwischen den beiden Rohren hergestellt wird. Das Aufschmelzen bzw. Verflüssigen geschieht durch Wärmeeintrag mit Hilfe der beheizten Klemme. Dieses Verfahren ist dann bevorzugt, wenn man einen zweikomponentigen Klebstoff verwendet, dessen eine Komponente auf die Innenwand des einen Rohrs und dessen zweite Komponente auf die Außenwand des zweiten Rohrs aufgetragen ist. Jedoch kann auch in diesem Fall mindestens eine der beiden Komponenten ein Treibmittel enthalten, so dass sie sich beim Erwärmen auf Aktivierungstemperatur ausdehnt.

Für das erfindungsgemäße Verfahren kann man einen Klebstoff auf Basis von Polyurethanen, Epoxidharzen oder Acrylaten verwenden, wobei der Begriff "Acrylat" substituierte Acrylate wie Methacrylat einschließt.

Beispiele von Klebstoffen, die im Rahmen der vorliegenden Erfindung eingesetzt werden können, sind so genannte "reaktive Schmelzklebstoffe". Diese sind in geschmolzenen Zustand streichfähig, so dass sie in diesem Zustand im Überlappungsbereich auf die Rohre aufgebracht werden können, ohne dass der Aushärtungs-Mechanismus aktiviert wird. Dieser erfordert vielmehr ein Erwärmen auf eine höher liegende Aktivierungstemperatur, bei der ein latenter Härter für eine rektionsfähige Bindemittel-Komponente (beispielsweise ein Präpolymer mit Epoxid-oder Isocyanat-Gruppen) aktiviert wird.

Beispielsweise ist ein reaktiver Schmelzklebstoff geeignet, der in EP 354 498 A2 näher beschrieben wird. Dieser enthält eine Harzkomponente, mindestens einen thermisch aktivierbaren latenten Härter für die Harzkomponente sowie ggf. Beschleuniger, Füllstoffe, Thixotropiehilfsmittel und weitere übliche Zusatzstoffe, wobei die Harzkomponente durch Umsetzung von einem beim Raumtemperatur festen Epoxidharz, einem bei Raumtemperatur flüssigen Epoxidharz und einem linearen Polyoxypropylen mit Amino-Endgruppen erhältlich ist. Die Epoxidharze werden in einer solchen Menge, bezogen auf das Polyoxypropylen mit Amino-Endgruppen, eingesetzt, dass ein Überschuss an Epoxidgruppen, bezogen auf die Aminogruppen, gewährleistet ist. Als latenter Härter ist beispielsweise Dicyandiamid geeignet. Für weitere Einzelheiten wird auf das genannte Dokument verwiesen. Speziellere Ausführungsformen für einen derartigen reaktiven Schmelzklebstoff sind in WO 93/00381 offenbart. Auch diese sind im Rahmen der vorliegenden Erfindung geeignet.

Weiterhin können Epoxidharz-Strukturklebstoffe eingesetzt werden, wie sie beispielsweise in WO 00/37554 näher beschrieben sind. Hierbei handelt es sich um Zusammensetzungen, die a) ein Copolymeres mit mindestens einer Glasübergangstemperatur von -30 °C oder niedriger und gegenüber Epoxiden reaktiven Gruppen oder ein Reaktionsprodukt dieses Copolymeren mit einem Polyepoxid, b) ein Reaktionsprodukt aus einem Polyurethan-Prepolymer und einem Polyphenol oder Aminophenol sowie c) mindestens ein Epoxidharz enthalten. Um diese Zusammensetzungen wärmehärtbar zu machen, enthalten sie zusätzlich einen latenten Härter aus der Gruppe Dicyandiamid, Guanamine, Guanidine, Aminoguanidine, feste aromatische Diamine und/oder Härtungsbeschleuniger. Zusätzlich können sie Weichmacher, Reaktivverdünner, Rheologie-Hilfsmittel, Füllstoffe, Netzmittel und/oder Alterungsschutzmittel und/oder Stabilisatoren enthalten. Für weitere Einzelheiten und konkrete Beispiele wird auf das genannte Dokument verwiesen.

Weiterhin können für das erfindungsgemäße Verfahren wärmehärtbare Schmelzklebstoffe auf Epoxidharz-Basis mit folgender Zusammensetzung eingesetzt werden (Mengenangaben in Gewichtsteilen):

| Rohstoff | Einsatzmenge (Gew.-Teile) |
|---|---|
| Epoxidharz | 450 |
| Mineralische Füllstoffe (Silicate und Carbonate) | 360 |
| Nitril-Polymerkautschuk | 100 |
| Härter / Beschleuniger (Dicyandiamid, Epoxidharz-Aminaddukt) | 30 |
| Expandierbare Mikroholkugeln auf Acrylatbasis | 25 |

Die vorstehend beispielhaft genannten thermisch aktivierbaren Klebstoffsysteme können mit oder ohne die weiter oben beschriebenen Treibmittel formuliert werden, je nachdem, ob man eine Volumenvergrößerung des Klebstoffs bei bzw. nach der thermischen Aktivierung anstrebt oder nicht.

In einem weiteren Aspekt betrifft die vorliegende Erfindung ein Verfahren zur Herstellung eines Kühlschranks, der Rohre zum Transport eines Kühlmediums aufweist, wobei man diese Rohre zumindest teilweise nach dem vorstehend beschriebenen erfindungsgemäßen Verfahren miteinander verbindet. Im Zusammenhang mit dem erfindungsgemäßen Verfahren wurde weiter oben bereits erläutert, was unter dem Begriff "Kühlschrank" zu verstehen ist.

Weiterhin betrifft die vorliegende Erfindung einen Kühlschrank, der Rohre zum Transport eines Kühlmediums aufweist, die ausschließlich aus Aluminium oder einer Aluminiumlegierung bestehen und die nach dem vorstehend beschriebenen erfindungsgemäßen Verfahren miteinander verbunden worden sind. Zur Erläuterung des Begriffs "Kühlschranks" gelten wiederum die weiter oben gemachten Ausführungen. Das Besondere an diesem Kühlschrank ist, dass die Rohre zum Transport des Kühlmediums ausschließlich aus Aluminium oder einer Aluminiumlegierung bestehen und dass auf die Verwendung der teureren Kupferrohre verzichtet werden kann.

Die vorstehend beschriebene Erfindung ermöglicht also insbesondere eine rationellere Fertigung von Kühlschränken und erlaubt es zusätzlich, als Material für die Rohrleitungen für das Kühlmedium ausschließlich das preisgünstige Aluminium einzusetzen.

### Abbildungsunterschriften:

- Fig.1:: Beispiel einer Verbindung zweier Wärmeaustauscher-Rohre (1) durch ein gekrümmtes Endrohr (3). Die Wärmeaustauscher-Rohre sind im Überlappungsbereich (4) mit dem Endrohr aufgeweitet. Der hierdurch entstehende Spalt ist durch einen Klebstoff (5) gefüllt.
- Fig. 2:: Eine Ausführungsform der vorliegenden Erfindung, bei der ein erstes Rohr (1) im Überlappungsbereich (4) aufgeweitet ist. Das zweite Rohr (2) ist an demjenigen Ende, das in den Überlappungsbereich des ersten Rohrs eingeschoben werden soll, manchettenartig außen mit dem Klebstoff beschichtet.
- Fig. 3:: Darstellung einer alternativen Ausführungsform der vorliegenden Erfindung. In diesem Fall ist das erste Rohr (1) im Überlappungsbereich nicht aufgeweitet. Stattdessen ist das zweite Rohr (2) in seinem Überlappungsbereich (4) aufgeweitet, wobei der Überlappungsbereich innen ringförmig mit dem Klebstoff (5) beschichtet ist.

## Patentansprüche

1. Verfahren zur Herstellung eines Kühlschranks, der Rohre zum Transport eines Kühlmediums aufweist, wobei man die Rohre zum Transport des Kühlmediums miteinander in einem Überlappungsbereich unter Verwendung eines Klebstoffs verbindet, der einen Spalt im Überlappungsbereich zwischen den Rohren ausfüllt, wobei man:
a) den Klebstoff auf den Überlappungsbereich mindestens eines der Rohre aufbringt und wobei der Klebstoff so ausgewählt wird, dass er nach dem Aufbringen auf den Überlappungsbereich und vor dem Verbinden der Rohre bei Temperaturen unterhalb von 30 °C fest ist und nicht ohne thermische Aktivierung aushärtet,
b) das Rohr mit dem im Überlappungsbereich angebrachten Klebstoff auf das andere Rohr aufsteckt oder in dieses einsteckt,
c) die Rohre im Überlappungsbereich mit einer beheizbaren Klemme gegeneinander fixiert, wobei die Klemme so ausgestaltet ist, dass sie die Rohre im Überlappungsbereich erwärmen kann,
d) den Klebstoff durch Erwärmen des Überlappungsbereichs mit Hilfe der beheizbaren Klemme thermisch aktiviert, so dass er aushärtet und die beiden Rohre im Überlappungsbereich verbindet, und
e) nach Aushärten des Klebstoffs die beheizbare Klemme entfernt,
**dadurch gekennzeichnet, dass** man einen Klebstoff verwendet, der sein Volumen bei der thermischen Aktivierung irreversibel um mindestens 0,5 % vergrößert.

2. Verfahren nach Anspruch 1, wobei das Material des ersten und des zweiten Rohrs einer der folgenden Kombinationen entspricht:
2a) erstes und zweites Rohr bestehen aus Kupfer oder einer Kupferlegierung,
2b) erstes und zweites Rohr bestehen aus Aluminium oder einer Aluminiumlegierung,
2c) das eine Rohr besteht aus Kupfer oder einer Kupferlegierung und das andere Rohr besteht aus Aluminium oder einer Aluminiumlegierung.

3. Verfahren nach Anspruch 2, **dadurch gekennzeichnet, dass** zumindest ein Rohr aus Aluminium oder einer Aluminiumlegierung besteht und dass dieses zumindest im Überlappungsbereich vor dem Aufbringen des Klebstoffs einer chemischen Oberflächenbehandlung unterzogen wird.

4. Verfahren nach einem oder mehreren der Ansprüche 1 bis 3, **dadurch gekennzeichnet, dass** die beheizbare Klemme elektrisch beheizbar ist.

5. Verfahren nach einem oder mehreren der Ansprüche 1 bis 4, **dadurch gekennzeichnet, dass** die beheizbare Klemme zwei halbrunde Klemmbacken und ein elastisches Bauteil zum Zusammenhalten der Klemmbacken aufweist.

6. Verfahren nach einem oder mehreren der Ansprüche 1 bis 5, **dadurch gekennzeichnet, dass** man die beheizte Klemme für eine Zeitdauer im Bereich von 5 bis 15 Minuten am Überlappungsbereich der Rohre belässt.

7. Verfahren nach einem oder mehreren der Ansprüche 1 bis 6, **dadurch gekennzeichnet, dass** man einen Polyurethan-, Epoxidharz- oder Acrylat-Klebstoff verwendet.

8. Verfahren nach einem oder mehreren der Ansprüche 1 bis 7, **dadurch gekennzeichnet, dass** man den Klebstoff am Ort der Herstellung der Rohrstücke aufbringt und die mit dem Klebstoff vorbeschichteten Rohrteile versendet oder lagert.

## Claims

1. A method for producing a refrigerator comprising tubes for conveying a cooling medium, wherein the tubes for conveying the cooling medium are joined together in an overlap zone using an adhesive which fills a gap in the overlap zone between the tubes, wherein:
a) the adhesive is applied onto the overlap zone of at least one of the tubes, the adhesive being selected such that, after application onto the overlap zone and before joining the tubes, it is solid at temperatures of below 30°C and does not cure without thermal activation,
b) the tube with the adhesive applied in the overlap zone is placed on the other tube or inserted therein,
c) the tubes are fixed relative to one another in the overlap zone using a heatable clamp, the clamp being designed such that it is capable of heating the tubes in the overlap zone,
d) the adhesive is thermally activated by heating the overlap zone with the assistance of the heatable clamp, such that it cures and joins the two tubes in the overlap zone, and,
e) once the adhesive has cured, the heatable clamp is removed, an adhesive is used whose volume increases irreversibly by at least 0.5% on thermal activation.

2. The method according to claim 1, wherein the material of the first and of the second tube corresponds to one of the following combinations:
2a) first and second tube consist of copper or a copper alloy,
2b) first and second tube consist of aluminum or an aluminum alloy,
2c) one tube consists of copper or a copper alloy and the other tube consists of aluminum or an aluminum alloy.

3. The method according to claim 2, wherein at least one tube consists of aluminum or an aluminum alloy and, prior to application of the adhesive, said tube is subjected to a chemical surface treatment at least in the overlap zone.

4. The method according one or more of claims 1 to 3, wherein the heatable clamp is electrically heatable.

5. The method according to one or more of claims 1 to 4, wherein the heatable clamp comprises two semicircular clamping jaws and a resilient component for holding the clamping jaws together.

6. The method according to one or more of claims 1 to 5, wherein the heated clamp is left on the overlap zone of the tubes for a period ranging from 5 to 15 minutes.

7. The method according to one or more of claims 1 to 6, wherein a polyurethane resin adhesive, epoxy resin adhesive or acrylate adhesive is used.

8. The method according to one or more of claims 1 to 7, wherein the adhesive is applied at the place of production of the tube pieces and the tube parts precoated with the adhesive are dispatched or placed in storage.

## Revendications

1. Procédé de fabrication d'un réfrigérateur présentant des tuyaux de transport d'un réfrigérant, consistant à raccorder entre eux les tuyaux de transport du réfrigérant dans une zone de recouvrement à l'aide d'un adhésif qui remplit un interstice dans la zone de recouvrement entre les tuyaux, dans lequel :
a) on applique l'adhésif sur la zone de recouvrement d'au moins l'un des tuyaux et dans lequel on sélectionne l'adhésif de façon à ce qu'il soit solide après l'application sur la zone de recouvrement et avant le raccordement des tuyaux à des températures inférieures à 30°C et ne durcisse pas sans activation thermique,
b) on emboîte le tuyau avec l'adhésif appliqué sur la zone de recouvrement sur l'autre tuyau ou on l'engage dans celui-ci,
c) on fixe les tuyaux l'un contre l'autre dans la zone de recouvrement à l'aide d'une pince chauffante, la pince étant conçue pour permettre d'échauffer les tuyaux dans la zone de recouvrement,
d) on active thermiquement l'adhésif en échauffant la zone de recouvrement à l'aide de la pince chauffante de sorte qu'il durcisse et on raccorde les deux tuyaux dans la zone de recouvrement, et
e) on retire la pince chauffante après durcissement de l'adhésif,
**caractérisé en ce qu'**on utilise un adhésif qui augmente son volume de manière irréversible d'au moins 0,5 % lorsqu'il est activé thermiquement.

2. Procédé selon la revendication 1, dans lequel la matière du premier et du deuxième tuyau correspond à l'une des combinaisons suivantes :
2a) le premier et le deuxième tuyau sont en cuivre ou alliage de cuivre,
2b) le premier et le deuxième tuyau sont en aluminium ou alliage d'aluminium,
2c) l'un des tuyaux est en cuivre ou alliage de cuivre et l'autre tuyau est en aluminium ou alliage d'aluminium.

3. Procédé selon la revendication 2, **caractérisé en ce qu'**au moins un tuyau est en aluminium ou alliage d'aluminium et **en ce que** celui-ci, au moins dans la zone de recouvrement, est soumis à un traitement chimique de surface avant l'application de l'adhésif.

4. Procédé selon l'une ou plusieurs des revendications 1 à 3, **caractérisé en ce que** la pince chauffante est chauffable électriquement.

5. Procédé selon l'une ou plusieurs des revendications 1 à 4, **caractérisé en ce que** la pince chauffante présente deux mâchoires de serrage demi-rondes et une pièce élastique destinée à maintenir ensemble les mâchoires de serrage.

6. Procédé selon l'une ou plusieurs des revendications 1 à 5, **caractérisé en ce qu'**on laisse la pince chauffante sur la zone de recouvrement des tuyaux pendant une durée comprise entre 5 et 15 minutes.

7. Procédé selon l'une ou plusieurs des revendications 1 à 6, **caractérisé en ce qu'**on utilise un adhésif polyuréthane, époxy ou acrylate.

8. Procédé selon l'une ou plusieurs des revendications 1 à 7, **caractérisé en ce qu'**on applique l'adhésif au lieu de fabrication des pièces tubulaires et on expédie ou entrepose les éléments tubulaires préenduits de l'adhésif.
